# EUROPEAN PATENT SPECIFICATION

(11) **EP 0 798 662 B1**
(45) Date of publication and mention of the grant of the patent: **30.06.2004**
(21) Application number: 97105154.5
(22) Date of filing: 26.03.1997
(51) Int. Cl.: G06K 15/10

(54) **Printing apparatus and method of controlling it**
Druckgerät und Verfahren zu seiner Steuerung
Appareil d'impression et méthode de contrôle

(30) Priority: 26.03.1996 JP 6963596; 26.03.1996 JP 6963696
(43) Date of publication of application: 01.10.1997
(73) Proprietor: SEIKO EPSON CORPORATION, Tokyo 163 (JP)
(72) Inventor: Kawase, Yuji, Suwa-shi, Nagano-ken 392 (JP); Ebina, Kouichi, Suwa-shi, Nagano-ken 392 (JP)
(74) Representative: Hoffmann, Eckart, Dipl.-Ing.

(56) References cited:
- EP-A- 0 310 217
- US-A- 5 102 244
- US-A- 5 278 582
- PATENT ABSTRACTS OF JAPAN vol. 011, no. 120 (M-580), 15 April 1987 & JP 61 262162 A (OKI ELECTRIC IND CO LTD), 20 November 1986,

## Description

The invention relates to printing apparatuses such as dot-matrix printers. More particularly the invention relates to printing apparatuses in which printing is achieved by means of dot printing elements disposed in a zigzag arrangement.

As is well known, impact-type dot printers and non-impact-type dot printers, such as ink-jet printers, use a print head which has a number of dot printing elements for printing individual dots. In impact-type dot printers the printing elements are typically wires while they are ink ejection nozzles in ink-jet printers. In such printers printing is achieved by driving these printing elements in synchronism with a relative motion of the print head relative to a recording medium (e.g. paper). An image (text or graphic) is printed by selectively printing individual dots in a dot matrix, i.e., a matrix of possible dot positions. In serial type printers the matrix is composed of one or more lines of dot columns. Each dot column comprises a number of dot positions corresponding to the number of printing elements of the printer. A line is printed by successively moving the print head relative to a recording medium in a first or line direction, and plural lines are printed by successively moving the print head relative to the recording medium in a second or column direction perpendicular to the first direction. When all printing elements of a print head are arranged in a single row extending perpendicular to the line direction, all dot positions of a particular dot column can be printed at once. The smaller the distance between adjacent printing elements and the higher the number of printing elements in the row, the higher is the printing resolution obtainable. For practical reasons, however, there is a limitation for the distance between adjacent printing elements in a row.

To overcome this limitation and further increase the resolution of the dot matrix it is known (JP-A-71879/94) to arrange the printing elements in a so-called zigzag arrangement. Fig. 10 illustrates an example of such zigzag arrangement. The example assumes a total of *k* = 128 nozzles 8 arranged in two parallel rows 11 and 12 perpendicular to the line direction. If the nozzles are numbered from top to bottom, the odd-numbered nozzles form row 11 and the even-numbered nozzles row 12. The distance between two adjacent nozzles in each row is 2*d* and the nozzles in row 12 are displaced by half that distance, i.e., *d* with respect to those in row 11. The two rows are spaced apart by a distance s.

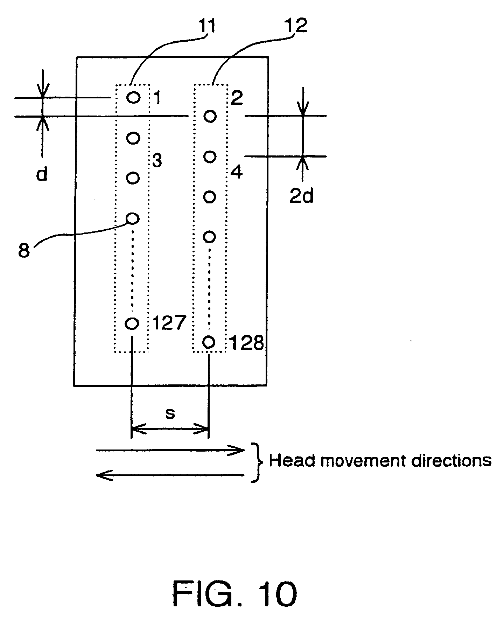

While the general way of printing an image by means of such print head is well known to those skilled in the art, a brief explanation may facilitate the understanding of the present invention. Referring to Fig. 10, let us assume the print head moves from left to right of the line direction and the position of row 12 represents the start of a line, i.e., the position of the first dot column of that line. Because the two rows are spaced apart by *s* dot columns, row 11 is positioned *s* dot columns left of the first dot column. Therefore, only the even-numbered dot positions of the first dot column can initially be printed by driving the nozzles of row 12. The print head is then moved stepwise to the right successively printing only the even-numbered dot positions of dot columns 2 to *s*. After the next step of the print head's motion row 11 is at the position of the first dot column while row 12 is at the position of the (*s* + 1)-st dot column. While the even-numbered dot positions of the (*s* + 1)-st dot column are printed by the nozzles in row 12, the nozzles in row 11 can now complete the first dot column by printing its odd-numbered dot positions. In other words, each dot column is printed in a number of steps corresponding to the number of rows of dot printing elements. The delay between these steps depends on the distance (expressed in number of dot columns) between adjacent ones of the rows.

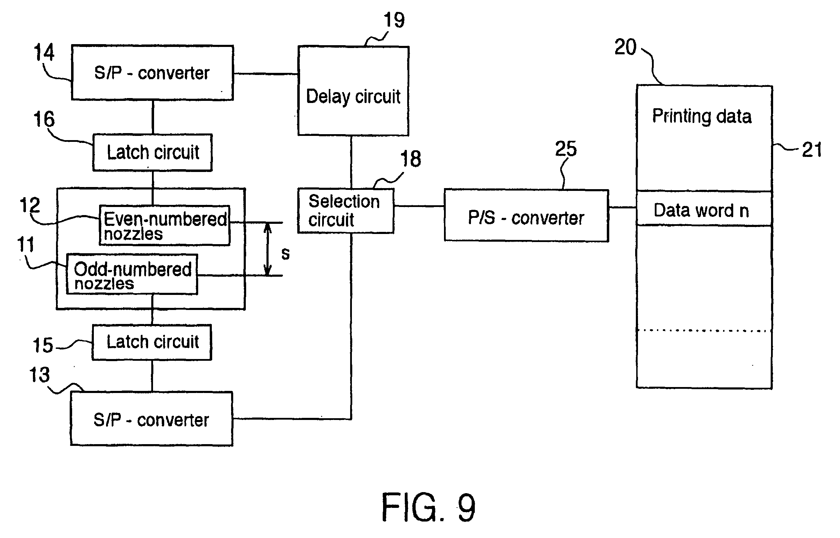

Fig. 9 illustrates a prior art example of a drive circuit suitable for driving the nozzles 8 arranged as shown in Fig. 10. Image buffer 20 holds the printing data in a bit-mapped form, i.e., each bit represents a certain dot position of the image to be printed by the print head. Printing data are read from image buffer 20 in units of dot columns, i.e. parallel data words of a number of bits equal to the number *k* of printing elements of the print head. Since, as explained above, the individual dot positions of a certain dot column cannot not be printed all at once, each data word read from image buffer 20 must be separated into subunits. Each subunit includes the data for the nozzles of a respective one of the two rows 11 and 12.

The data word (the *n*-th data word) for the dot column corresponding to the current position of row 11 or 12, whichever is to be printed first depending on the direction of the head's movement, is read from image buffer 20 and then converted into a serial bit string by parallel-to-serial (P/S) converter 25. Separation circuit 18 receives the bit string and separates it into substrings of the even-numbered bits and the odd-numbered bits, respectively. The substring for the nozzles of the row to be printed first (e.g., row 11) is converted back to a parallel word (subword) by serial-to-parallel (S/P) converter 13. The other substring is applied to a delay circuit 19 in the form of a shift register. The shift register delays the other substring by *s* x 64 bits and applies the delayed substring to S/P-converter 14. The subwords from S/P-converters 13 and 14 are simultaneously latched into latch circuits 15 and 16, respectively, and the nozzles of row 11 are driven based on the bits latched in latch circuit 15 while at the same time the nozzles of row 12 are driven based on the bits latched in latch circuit 15. As will be appreciated, because of the delay by delay circuit 19, when the nozzles of row 11 print the odd-numbered dot positions of the *n*-th dot column, the nozzles of row 12 print the even-numbered dot positions of the (*n*-*s*)-th dot column where the printing direction is assumed to be from right to left in Fig. 10. If the printing direction is from left to right in Fig. 10, the data for the odd-numbered nozzles must be delayed.

As explained above, for driving a print head with dot printing elements in a zigzag arrangement the prior art requires a the delay circuit 19, a (s x *k*/2)-bit shift register, and a circuit for controlling this shift register. Furthermore, to print in both directions of the print head's reciprocating motion in the line direction, both the connection between delay circuit 19 and separation circuit 18 and the connection between delay circuit 19 and either S/P-converter 13 or S/P-converter 14 must be switched depending on the direction.

US-A-5,278,582 discloses a printing apparatus for printing dot patterns on a recording medium in a matrix composed of dot columns extending in a first direction and arranged substantially parallel to each other in a second direction perpendicular to said first direction, each dot column defining *k* dot positions. The apparatus comprises a print head adapted to move relative to the recording medium in said second direction and having *k* dot printing elements which are grouped into two groups, the dot printing elements of each group being arranged in a respective one of two rows extending in said first direction, and the two adjacent rows being spaced apart from each other in said second direction by a certain number of said dot columns so that both rows are at different print positions relative to said recording medium. A storage means stores *k*-bit words of printing data each word including the printing data for a respective one of said dot columns. Data setting means read a batch of two data words from said storage means, each data word corresponding to the dot columns at a respective one of the different print positions of said two rows. From each of said two data words the set of those bits is selected that correspond to the dot printing elements in the respective row, and print control means simultaneously control each of said two groups of dot printing elements based on the respective one of said selected sets of bits.

EP-A-0 310 217 discloses a printing apparatus basically similar to that known from US-A-5,278,582, wherein the k dot printing elements are grouped into *i* groups ( *i* ≥ 2). The storage means stores four 1-byte printing data words for each dot column, i.e., *k* =32. A batch of 32 data words is read from the storage means and one bit extracted from each of these 32 data words, each of the 32 extracted bits corresponding to the print position of a respective one of the 32 dot printing elements. In other words, the data for all dot columns corresponding to the current print positions of the *i* rows of dot printing elements are read from the storage means, and from the read data of each dot column those bits are extracted that correspond to a dot printing element in the respective one of the *i* rows of dot printing elements.

A printing apparatus and method according to the pre-characterizing portion of claim 1 is known from the documents JP 59-41277 A and JP 56-63677 A.

Since on the one hand, there is a tendency to reduce the size and weight as well as the costs of printers there is a need to reduce the size and weight of the print heads. On the other hand, there is also a need for high-speed compact printers that offer high printing quality including a high resolution. Therefore, an objective of the present invention is to provide a printing apparatus with a print head having dot printing elements in a zigzag arrangement in order to provide high-resolution printing, which employs a simple drive circuit capable of printing bit-mapped data without using the aforementioned delay circuit and/or complicated switching control. Another objective of the present invention is to provide a high-speed printing apparatus that offers high printing quality by providing a control method and a drive circuit configuration that eliminate the software processing previously used for inputting/outputting bit data and for rearranging bit data sequence and that improve processing speed and reduce CPU load. Still another objective of the present invention is to provide a printing apparatus that can reduce the printed circuit board area occupied by the drive circuit by eliminating the large delay circuit which is required in conventional apparatuses and that can reduce both the size and weight of the print head. Another objective of the invention is to provide a control method for such printing apparatus.

These objectives are achieved with a printing apparatus as claimed in claim 1 and a method as claimed in claim 9. Preferred embodiments of the invention are subject-matter of the dependent claims.

In a printing apparatus and a method embodying the present invention, each time data are read from the image buffer for driving the dot printing elements of the print head, a batch of data words is read, the batch comprising *i* data words when the dot printing elements are arranged in *i* rows. Each data word of the batch includes the bits required for driving the dot printing elements in a respective one of the *i* rows. The storage from which the data words are read includes printing data words and dummy data words. The printing data words correspond to a sequence of dot columns to be printed and said dummy data words correspond to imaginary dot columns contiguous to both ends of said sequence of dot columns. Reading the *i* data words as a batch means that all *i* data words are read either simultaneously or one after the other but without any data word other than one of the *i* data words being read in between. The required bits of each of the *i* data words are extracted either simultaneously or sequentially and then used to drive all dot printing elements in accordance with the respective ones of the extracted bits at the same time. When one such batch of data words has been read, processed and printed, the next batch is read. By thus reading all the data required for driving the dot printing elements in the *i* rows, a delay circuit such as that of the prior art explained above is not necessary. Therefore, the present invention can eliminate switching control and buffer or delay circuits. Furthermore, since it is not necessary to change the control method depending on the moving direction of the print head, the control can be drastically simplified and the area occupied by the control circuit can be reduced.

If the dot printing elements are positioned in two rows on the print head, the dot printing elements of one row can print either the odd- or the even-numbered bits, and those of the other row can print the even-numbered or the odd-numbered bits, respectively.

Further objects and advantages achieved by the present invention will be understood from the following detailed description of preferred embodiments with references to the drawings, in which:
- Fig. 1: is a block diagram illustrating a first embodiment of the present invention,
- Fig. 2: is a timing diagram for the embodiment shown in Fig. 1,
- Fig. 3: is a block diagram illustrating a second embodiment the present invention,
- Fig. 4: is a timing diagram for the embodiment shown in Fig. 3,
- Fig. 5: is a block diagram illustrating a third embodiment of the present invention,
- Fig. 6: is a block diagram illustrating a fourth embodiment of the present invention,
- Fig. 7: is a block diagram illustrating a fifth embodiment of the present invention,
- Fig. 8: is a block diagram illustrating a sixth embodiment of the present invention,
- Fig. 9: is a block diagram showing a prior art drive circuit,
- Fig. 10: is an example of a zigzag arrangement of dot printing elements.

To simplify the following description the invention is explained with reference to ink jet printers with a print head having nozzles 8 arranged in two rows 11 and 12 as shown in Fig. 10 and explained above. It is to be noted, however, that the particular type of dot printing elements is not critical to the invention and the invention applicable to both impact-type and non-impact-type dot matrix printers.

### First Embodiment

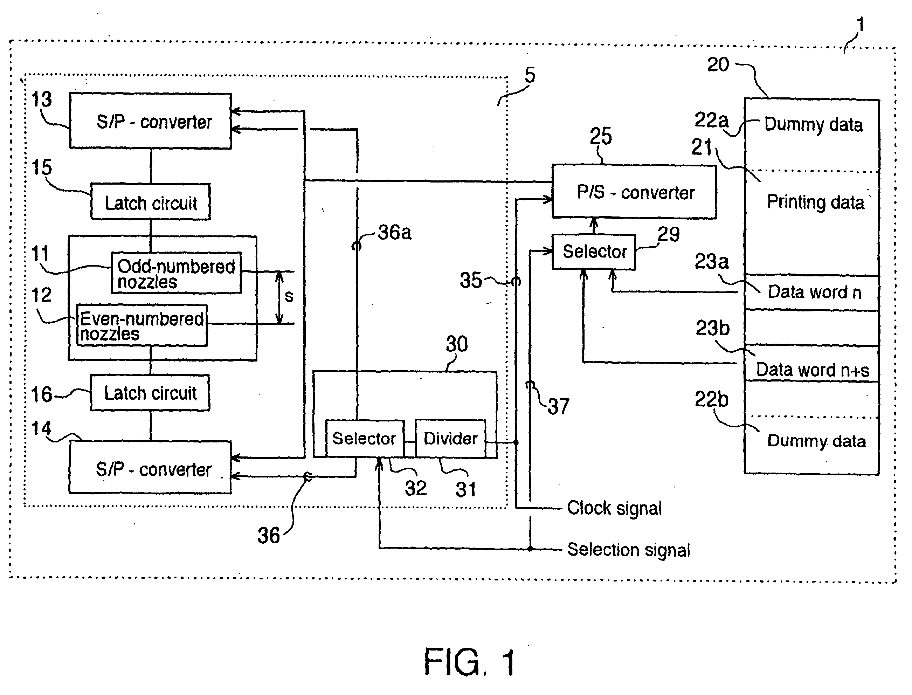

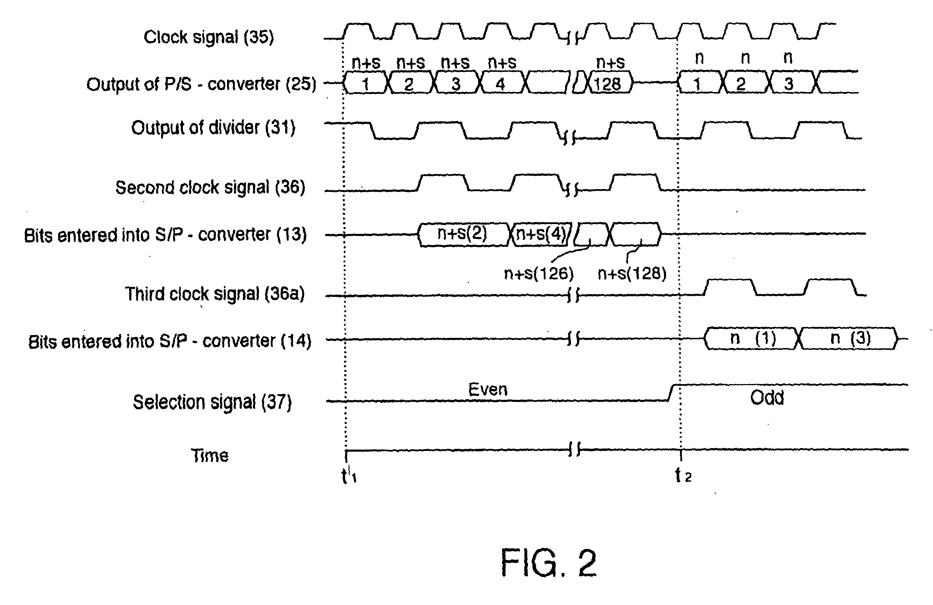

A first embodiment of the invention will now be explained with reference to Figs. 1 and 2. Fig. 1 is a block diagram of the drive circuit of a printer 1 embodying the present invention. As indicated by the broken line in Fig. 1, part of the drive circuit is provided on the print head 5. Image buffer 20 stores printing data 21 in a bit-mapped form to which characters and symbols to be printed have been expanded in a manner well known in the art. As explained above, image buffer is organized to store *k*-bit data words, i.e., each data word corresponds to one dot column of the image (text or graphic) to be printed. Image buffer 20 in this embodiment additionally holds dummy data words 22a and 22b which correspond to at least the s dot columns beyond the first and the last effective dot column in each line. Assuming that the value H of a bit in a data word represents a dot to be printed and the value L a dot to be left blank, the bits of the dummy data words 22a and 22b are L bits, i.e., represent blanks. It is possible to provide dummy data words 22 in a specified area of image buffer 20 beforehand, but it is also possible to automatically generate dummy data words 22 and append them to either end of the data words for one line when the information to printed is converted into the bit-mapped printing data.

Data words read from image buffer 20 are applied via selector 29 to P/S-converter 25. P/S-converter 25 supplies the respective serial bit strings to print head 5. A characteristic feature of the present invention in this embodiment is that data words are read in pairs from image buffer 20, the two data words of each pair corresponding to two dot columns spaced apart by *s* dot columns. Under the control of selection signal 37 selector 29 first selects one and then the other data word of each pair so as to apply them sequentially to P/S-converter 25, one immediately following the other. For example, when data word 23a corresponding to dot column *n* which is to be printed by odd-numbered nozzles 8 of row 11 and data word 23b corresponding to dot column *n* + *s* which is to be printed by even-numbered nozzles 8 of row 12 form one pair of data words, the data word corresponding to dot column *n* + 1 and the data word corresponding to dot column (*n* + *s*) + 1 form the next pair (if printing is from left to right in Fig. 10). At the edges of a line, when there is no data word 23a or 23b, a dummy data word 22a or 22b, respectively, is used instead. Selector 29 treats dummy data words 22a and 22b in the same manner as printing data words 21. Consequently, when nozzle row 11, for example, is at a position on the left side of the left edge of a particular line, a dummy data word 22a is sent to odd-numbered nozzles in row 11. In this case a printing data word 21 is printed by even-numbered nozzles 8 in row 12 only and not by the nozzles in row 11. A corresponding operation takes place at the right edge of the line. Thus, selector 29 always receives a pair of data words (printing or dummy data words) and there is no need to identify the edges of the lines. This configuration significantly simplifies the line edge processing in a printer with nozzles in a zigzag arrangement. Assuming the dot columns of a line are always counted from the left edge of a line to right edge, then the only difference between printing in one or the other direction is that in one case the pair of data words *n* + 1/(*n* + *s*) + 1 follows the pair *n*/(*n* + *s*) while in the other case the pair of data words *n*-1/(*n* + *s*) - 1 follows the pair *n*/(*n* + *s*).

The drive circuit part of print head 5 comprises S/P-converters 13 and 14 and latch circuits 15 and 16 similar to those in the drive circuit shown in Fig. 9 and explained above. A clock control circuit 30 is additionally provided. Clock control circuit 30 receives clock signal 35 of frequency *f* used to clock P/S-converter 25, and includes frequency divider 31 for frequency dividing clock signal 35 by 2. Selector 32 receives the divided clock signal of frequency *f*/2 and applies it in response to selection signal 37 either as a second clock signal 36 to S/P-converter 14 or a third clock signal 36a to S/P-converter 13.

The process by which data from image buffer 20 are applied to print head 5 for printing in this embodiment is explained with references to the timing diagram in Fig. 2.

At time t1 P/S-converter 25 begins converting the data word *n* + *s* (the data word corresponding the (*n* + *s)*-th dot column) into a corresponding serial bit string. P/S-converter 25 is clocked by clock signal 35 at frequency *f*, and sequentially supplies bits 1 through 128 to S/P-converters 13 and 14. At the same time, clock signal 36 of frequency *f*/2 is supplied to S/P-converter 14 and only the even-numbered bits 2 through 128 are extracted to enter S/P-converter 14. Note that clock signal 36 is synchronized with the falling edges of clock signal 35 and is supplied to S/P-converter 14 when P/S-converter 25 begins conversion at the timing shown in Fig. 2. In this way, the bits of data word *n* + *s* which are to be printed by the even-numbered nozzles are separated from those to be printed by the odd-numbered nozzles. Since, during this process, the third clock signal 36a is not supplied to S/P-converter 13 the odd-numbered bits of data word *n* + *s* are not entered into S/P-converter 13.

When P/S-converter 25 has finished sending the last bit of data word *n* + *s*, i.e., bit 128 in this embodiment, it starts converting data word n at time t2. During this transition, one period of clock signal 35 is left between the last bit of data word *n* + *s* and the first bit of data word *n* so that now the phase of the divided clock signal from divider 31 is shifted by one bit relative to the bit string from P/S-converter 25. Consequently, when the selection signal causes selector 32 to supply this divided clock signal as the third clock signal 36a to S/P-converter 13, odd-numbered bits of data word *n* are extracted. After conversion to a parallel subword these odd-numbered bits are used to drive the nozzles of row 11. During this process, since the second clock signal 36 is not supplied to S/P-converter 14, the even-numbered bits of data word n are not entered into S/P-converter 14 which, therefore, keeps the previously entered even-numbered bits of data word *n* + *s.*

When bit 127, the last odd-numbered bit of data word *n*, has entered S/P-converter 13, the data words (subwords) of S/P-converters 13 and 14 are latched to latch circuits 15 and 16, respectively, and even-numbered dots of dot column *n* + *s* and odd-numbered dots of dot column *n* are printed simultaneously. When the printing is finished, the operation is repeated with the pair of data words (*n* + 1) and (*n* + *s*) + 1. Note that while in the embodiment described above data word *n* + *s* is processed first and data word n second, this order is not critical to the invention and could be reversed as long as the odd-numbered bits of data word n are loaded into S/P-converter 13 and the even-numbered bits of data word *n* + *s* are loaded into S/P-converter 14. However, to convert the two data word *n* and *n* + *s* continuously into respective serial bit strings, it is preferable to start with the data word whose even-numbered bits are to be used as in this embodiment. If the order is reversed, i.e., the data word for the odd-numbered bits processed first, two bits, namely the last bit (even-numbered bit) of the first data word and the first bit (even-numbered bit) of the second data word, have to be skipped. This requires an additional circuit for masking the respective clock signal for S/P-conversion.

Printer 1 of this embodiment achieves high-resolution printing by repeating the step of sending the data of data words corresponding to each nozzle row position and printing. Furthermore, in printer 1 of this embodiment, the circuit for sending data from the image buffer to the print head is implemented using an extremely simple circuit in which a P/S-converter for converting the data from the image buffer from parallel to serial is connected to an S/P-converter for converting data from serial to parallel at the print head. Consequently, extra buffer or delay circuits for temporarily storing the data of individual nozzle rows are not needed, nor is it necessary to switch control based on the printing direction of the print head. Furthermore, because blank dummy data 22 are provided in image buffer 20, a process such as stopping the printing by one of the nozzle rows at the line edge is unnecessary. Therefore, data transfer speed can be increased in a dot printer in which nozzles are positioned in a zigzag arrangement, and the associated CPU load can be reduced. Furthermore, because the circuit related to data transfer is simplified, the large number of circuit elements required for configuring the delay circuit, etc. of the prior art can dispensed with, resulting in a smaller gate array, and the area occupied by the control circuit can be reduced.

Furthermore, since it is not necessary to change the control method based on the printing direction of the print head, a single route can be used for transferring data from image buffer 20 to print head 5. Therefore, the print head can be made smaller and lighter in weight, and a high-speed compact printer offering excellent printing quality is provided.

### Second Embodiment

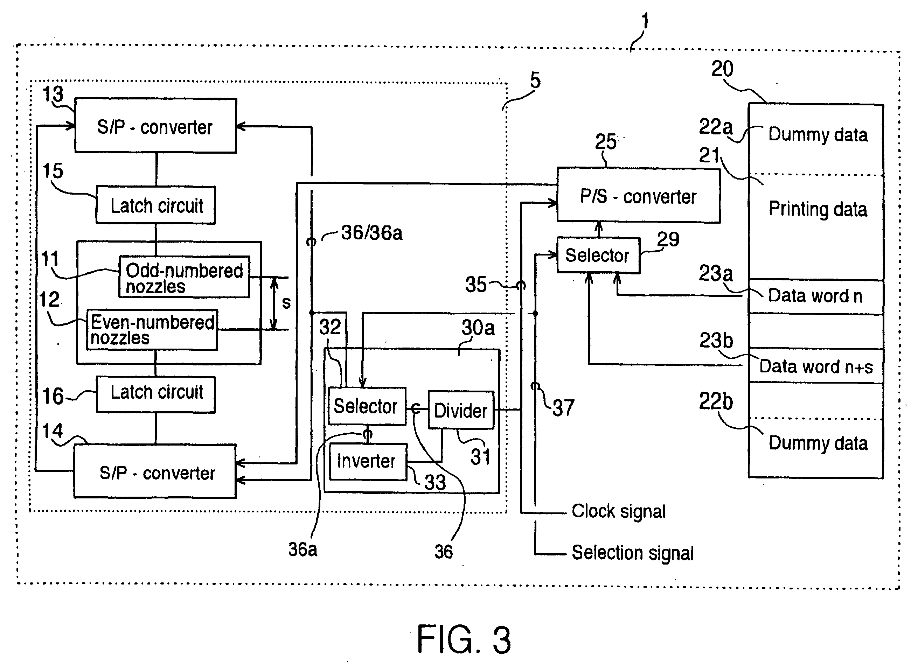

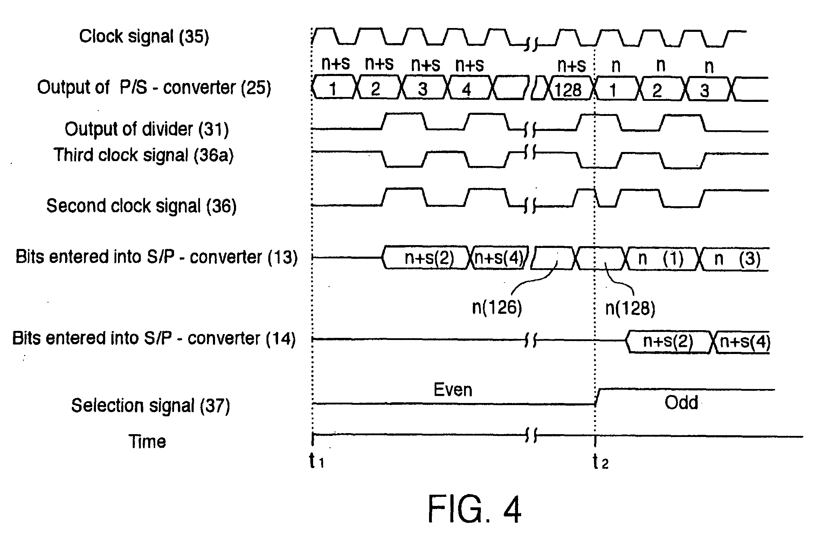

A second embodiment of the invention will be explained with reference to Figs. 3 and 4. As will be seen from a comparison between Fig. 1 and Fig. 3, the second embodiment differs from the first embodiment in that clock control circuit 30a of the second embodiment is additionally provided with inverter 33 that generates a third clock signal 36a by inverting the divided clock signal from divider 31, and that S/P-converter 14 does not receive its serial input signal directly from P/S-converter 25 but through S/P-converter 13. In response to selection signal 37, selector 32 selectively supplies either the second clock signal 36 or the third clock signal 36a to both S/P-converters 13 and 14.

The process by which data from image buffer 20 are applied to print head 5 in the second embodiment is explained with references to the timing diagram in Fig. 4.

At time t1 P/S-converter 25 begins converting the data word *n* + *s* into a corresponding serial bit string. At the same time, the second clock signal 36 is supplied from clock control circuit 30a to both S/P-converters 13 and 14. Based on this second clock signal, the even-numbered bits are extracted and entered into S/P-converter 13. At the same time the data subword previously held by S/P-converter 13 is successively shifted into S/P-converter 14. When bit 128, which is the last even-numbered bit of bit string *n* + *s*, has been sent to S/P-converter 13 (time t2 in Fig. 4), the data word *n* is converted by P/S-converter 25 into a corresponding serial bit string, immediately following the bit string *n* + *s*. Bit string *n* is applied to S/P-converter 13. At the same time, the third clock signal 36a (the phase-inverted version of the second clock signal 36) is supplied from clock control circuit 30a to both S/P-converters 13 and 14. Based on this third clock signal 36a, odd-numbered bits of bit string *n* are extracted and sequentially entered into S/P-converter 13. Simultaneously, the even-numbered bits of bit string *n* + *s* are sequentially put out from S/P-converter 13 and entered into S/P-converter 14. Therefore, when all of the odd-numbered bits of bit string *n* have been entered into S/P-converter 13, all of the even-numbered bits of bit string *n* + *s* have been entered into S/P-converter 14. Thus, the data subwords held in S/P-converters 13 and 14 can now be latched and printed as in the first embodiment.

Using inverter 33 and sending the first odd-numbered bit of the second serial bit string immediately following the last even-numbered bit of the first serial bit string without pause in between, as in the second embodiment, is an alternative to using the same clock signal but providing a pause, as in the first embodiment. Thus, both of the first and second embodiments can use either way of creating the phase shift required for selectively extracting the even-numbered bits or the odd-numbered bits. Regarding the order in which data words *n* and *n* + *s* are serialized and sent to print head 5, what has been discussed above with respect to the first embodiment applies to second embodiment as well.

### Third Embodiment

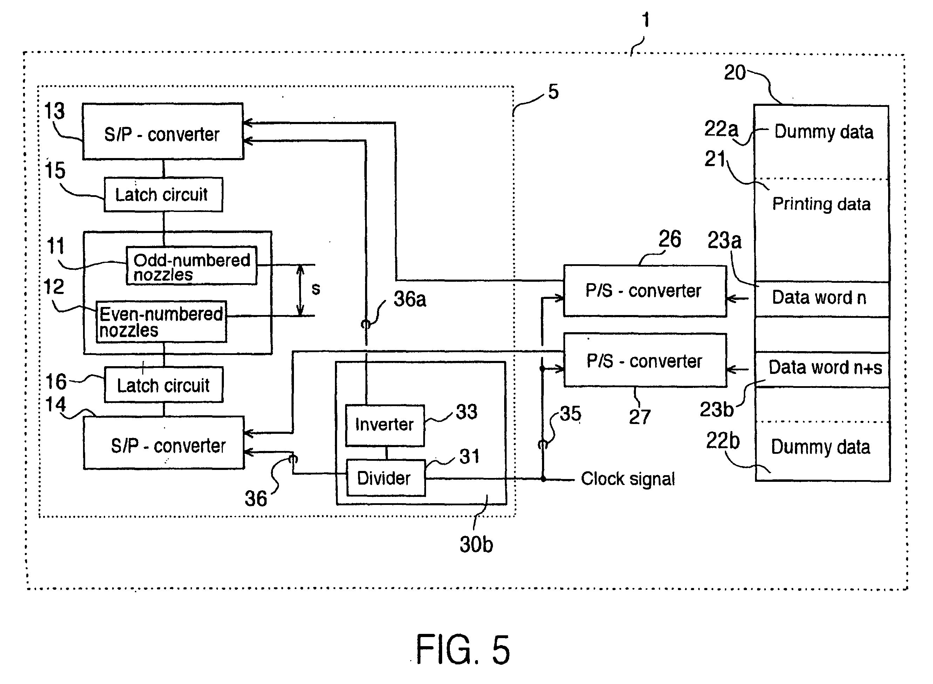

A third embodiment of the invention will be explained with reference to Fig. 5. As will be seen from a comparison between Fig. 1 and Fig. 5, the third embodiment differs from the first embodiment in that clock control circuit 30b of the third embodiment includes inverter 33 of the second embodiment but not selector 32. Furthermore, this embodiment employs two P/S-converters 26 and 27 operating in parallel, and does not need selector 29. Selection signal 37 is not used, correspondingly.

Pairs of a data word (23a or 22a) corresponding to the position of the odd-numbered nozzles in row 11 and a data word (23b or 22b) corresponding to the position of the even-numbered nozzles in row 12 are read out in parallel as data words *n* and *n* + *s* from image buffer 20 and applied to P/S-converter 26 and P/S-converter 27, respectively. The corresponding two serial bit strings generated from P/S-converters 26 and 27 are applied to S/P-converters 13 and 14, respectively. S/P-converter 14 receives the second clock signal 36 and S/P-converter 13 the third clock signal 36a which is phase-inverted with respect to the second clock signal 36, from clock control circuit 30b. Thus, S/P-converter 14 extracts the even-numbered bits from the bit string resulting from data word *n* + *s* and S/P-converter 13 extracts the odd-numbered bits from the bit string resulting from data word *n*.

Because the printer in this embodiment is provided with two P/S-converters 26 and 27, both data word *n* and data word *n* + *s* are simultaneously converted to the respective serial bit string and are sent to the print head. These two bit strings are also simultaneously converted back to parallel subwords by S/P-converters 13 and 14 of print head 5. Consequently, the processing time required for data transfer can be reduced further.

In the first to third embodiments explained above two serial bit strings each including all the bits of the respective data words are sent either simultaneously or sequentially to the print head 5. The drive circuit part of the print head extracts the needed bits from each bit string by using clock signals of half the clock rate of the bit strings and an appropriate phase so as to obtain the even-numbered bits of one bit string and the odd-numbered bits of the other bit string. In the embodiments the clock signals 36 and 36a for extracting the even- and odd-numbered bits are virtually phase inverted with respect to each other. More exactly, the phase of the third clock signal 36a relative to the respective one serial bit string is shifted by one clock period of the clock signal 35, i.e., one bit of the bit string, relative to the phase of the second clock signal 36 relative to the respective other serial bit string. As will be appreciated by those skilled in the art, this phase shift need not be exactly one clock period of clock signal 35 but may a fraction of one period as long as the required bit extraction is achieved.

In the preceding embodiments, bit extraction is achieved by cooperative functions of drive circuit parts on the printer main part and the print head, i.e., parallel-to-serial conversion at a first clock rate on the printer main part side and serial-to-parallel conversion at a second clock rate, which is half the first clock rate, on the print head side. As will be explained in the following, the principle of the invention may also be implemented by performing the bit extraction completely on the printer main part side and transferring only the required bits to the print head. This allows for a further simplification of the drive circuit part on the print head side.

### Fourth Embodiment

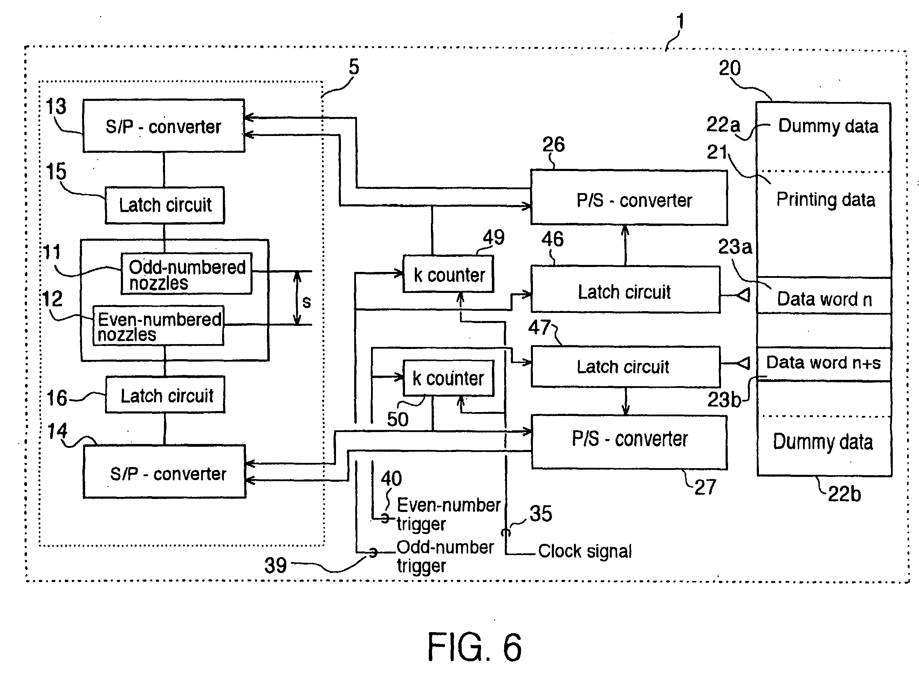

A fourth embodiment of the invention will be explained with reference to Fig. 6. The fourth embodiment differs from the first embodiment (compare Figs. 1 and 6) in the following. Instead of P/S-converter 25 and selector 29 of the first embodiment two P/S-converters 26 and 27, two latch circuits 46 and 47 and two counters 49 and 50 are used. The drive circuit part of the print head has no clock control circuit.

Data words are read from image buffer 20 in pairs of data word *n* and data word *n* + *s* as has been explained for the preceding embodiments. In the fourth embodiment the two data words of each pair may be read simultaneously into latch circuits 47 and 46, respectively. Each latch circuit has a capacity of *k* bits (remember *k* is the total number of nozzles and the length of each data word) and a parallel input and parallel output. On the other hand, P/S-converters 26 and 27 have a *k*/2-bit input each. For example, in the printer of this embodiment, P/S-converters 26 and 27 can each convert 64 (*k*/2) bits of parallel data to a serial bit string. The *k*/2-bit parallel input of P/S-converter 26 is connected to only the odd-numbered bits of the *k* bit output of latch circuit 46. The *k*/2-bit parallel input of P/S-converter 27 is connected to only the even-numbered bits of the *k* bit output of latch circuit 47. It is also possible to mask the odd/even-numbered bits of the *k* bits in latch circuit 46/47 and supply the result to P/S-converter 26/27.

With such a configuration, P/S-converter 26 converts only the odd-numbered bits of data word *n*, and sends the resulting serial substring *n* to S/P-converter 13. S/P-converter 13 converts this serial substring into a parallel subword, and controls the odd-numbered nozzles in row 11 via latch circuit 15. P/S-converter 27 converts only the even-numbered bits of data word *n* + *s* and sends the resulting serial substring to SIP-converter 14. S/P-converter 14 converts this serial substring to a parallel subword and controls the even-numbered nozzles in row 12 via latch circuit 14.

These parallel-serial conversion processes are controlled by counters 49 and 50 which output *k*/2 pulses each based on clock signal 35 when trigger signals 39, 40 are received. When odd trigger signal 39 is supplied, data word *n* is first set in latch circuit 46. Based on this trigger signal 39, counter 49 which controls odd-numbered nozzles of row 11 begins counting based on clock signal 35 and outputs *k*/2 pulses to P/S-converter 26. The odd-numbered-bits of data word *n* are output at the rate or frequency of clock signal 35 as a serial substring. Furthermore, the pulses output by counter 49 are also supplied to S/P-converter 13 which takes in the *k*/2 bits of the serial substring synchronized with the pulses from counter 49. Counter 50 operates in response to even trigger signal 40 in the same way as counter 49 to control P/S-converter 27 and S/P-converter 14 correspondingly.

In the printer of this embodiment, when the timing of trigger signals 39, 40 is the same or the same signal is used for both, data transfer to the odd-numbered nozzles is processed in parallel with data transfer to the even-numbered nozzles, and thus data can be transferred at a higher speed than is possible with a sequential transfer. In this case one counter could be used instead of two. Irrespective of whether the data transfer from the printer main part to the print head is in parallel rather than sequential, this and the following embodiments allow for a higher transfer speed also because the same clock rate used for P/S-conversion is also used for S/P-conversion. Incidentally, a start and stop control as provided by counters 49 and 50 or one of them may also be applied to the clock signal 35 in the first to third embodiments, if necessary.

In this fourth embodiment like in the following ones, the data subwords to be set in latch circuits 15 and 16 on the print head side are available on the printer main part side. The reason why they are sent as serial substrings to the print head and reconverted to parallel subwords on the print head side, is that transferring parallel data to the print head would require a correspondingly high number of lines between the print head and the printer main part. This is undesirable where the print head is moveable with respect to the printer main part.

### Fifth Embodiment

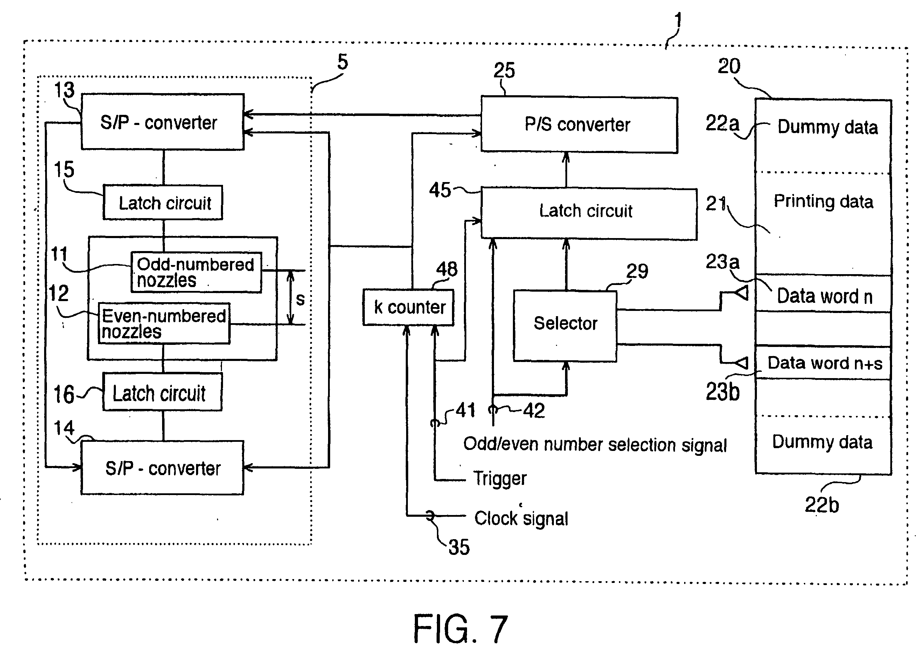

A fifth embodiment of the invention will be explained with reference to Fig. 7. The fifth embodiment may be considered as a combination between the second and the fourth embodiments. More particularly, as shown in Fig. 7, the printer in this embodiment has selector 29 which is used to selectively apply data word *n* (23a or 22a) and data word *n* + *s* (23b or 22b) from image buffer 20 to a single latch circuit 45 which in turn supplies subwords to P/S-converter 25. P/S-converter 25 sends a serial substring corresponding to each subword to S/P-converter 13 of print head 5. S/P-converter 14 is connected to S/P-converter 13 like in the second embodiment and receives serial substrings from P/S-converter 25 via S/P-converter 13.

Converters 13, 14 and 25 are clocked by the same pulse signals supplied from counter 48. Counter 48 begins counting in response to a trigger signal 41, and outputs *k*/2 pulse signals at the rate or frequency of clock signal 35. Trigger signal 41 is also supplied to latch circuit 45 which supplies data to P/S-converter 25 upon receiving trigger signal 41. Latch circuit 45 is a *k*-bit register responsive to selection signal 42 for selectively applying either only the even-numbered bits or the odd-numbered bits to P/S-converter 25 having a *k*/2-bit parallel input. This kind of control can be easily implemented using a data selector.

In this embodiment selection signal 42 is first set to select even-numbered bits. Based on this signal, selector 29 selects data word n +s corresponding to the even-numbered nozzles in row 12 and sets it in latch circuit 45. The even-numbered bits of data word *n* + *s* are supplied from latch circuit 45 to P/S-converter 25 based on selection signal 42. Based on trigger signal 41, counter 48 supplies pulse signals to converters 25, 13 and 14, and the even-numbered bits of data word *n* + *s* are sent as a serial substring to S/P-converter 13 and stored therein. When counter 48 has put out *k*/2 pulses, selection signal 42 is set to select odd-numbered bits. Based on this, selector 29 selects data word *n* corresponding to the odd-numbered nozzles in row 11 and sets it in latch circuit 45. The odd-numbered bits of data word *n* in latch circuit 45 are applied to P/S-converter 25 based on selection signal 42. Based on trigger signal 41, counter 48 begins supplying pulse signals again. Based on these pulse signals, the odd-numbered bits of data word *n* are sent as another serial substring to S/P-converter 13 and are again converted from parallel to serial. Since pulse signals from counter 48 are simultaneously supplied to S/P-converter 14, the even-numbered bits of data word *n* + *s* output from S/P-converter 13 are sent to and sequentially entered into S/P-converter 14. In this way, the odd-numbered bits of data word *n* are set in S/P-converter 13 to control the odd-numbered nozzles in row 11, while the even-numbered bits of data word *n* + *s* are set in S/P-converter 14 to control the even-numbered nozzles in row 12. The bits set in S/P-converters 13 and 14 are latched and printed in the same way as in the first embodiment.

In this embodiment, P/S-converter 25 sends the bits for the nozzles 8 in two groups of even-numbered and odd-numbered bits, respectively, to the same S/P-converter 13, and S/P-converter 14 receives the even-numbered bits via S/P-converter 13. Therefore, only one transfer route to print head 5 is needed. Naturally, it is also possible to send data to S/P-converter 13 via S/P-converter 14. In such a case, the aforementioned process is reversed, i.e., odd-numbered bits are sent first, followed by even-numbered bits.

### Sixth Embodiment

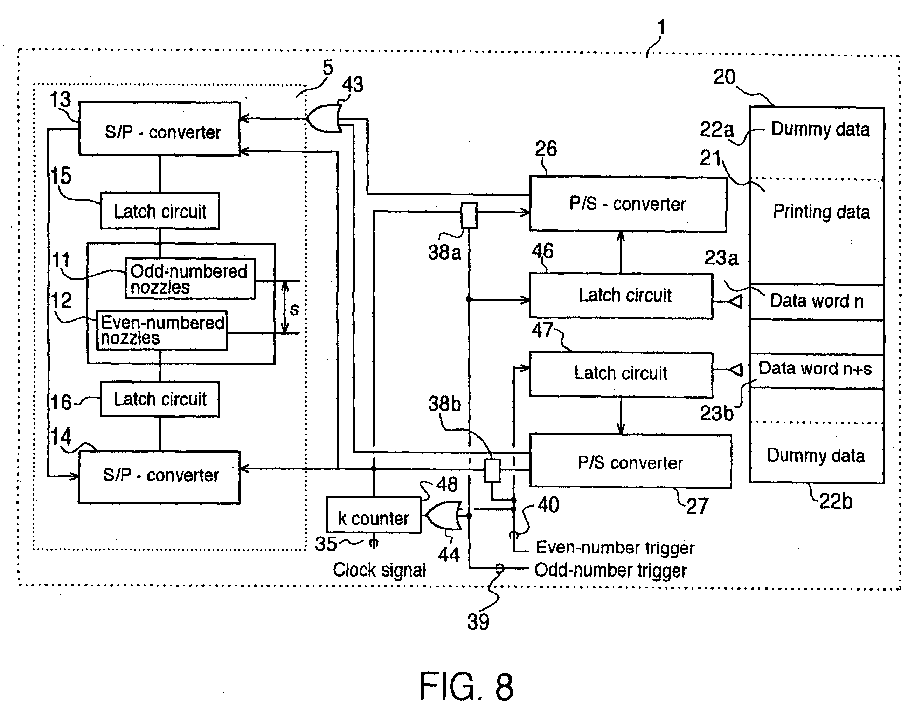

A sixth embodiment of the invention will be explained with reference to Fig. 8. The printer in this embodiment is, like that of the fourth embodiment, provided with two latch circuits 46 and 47 and two P/S-converters 26 and 27. Therefore, data word n corresponding to odd-numbered nozzles in row 11 is set in latch circuit 46, and the odd-numbered bits of this data word are applied to and converted by P/S-converter 26 into a serial substring. The operation is the same for the even-numbered nozzles in row 12, i.e., data word n + s is set in latch circuit 47 and the even-numbered bits of this data word are applied to and converted by P/S-converter 27 into a serial substring. In this embodiment, both P/S-converters 26 and 27 send serial substrings to S/P-converter 13 via OR gate 43. As in the fifth embodiment, S/P-converter 14 is connected to S/P-converter 13, and receives data for the nozzles in row 12 from image buffer 20 via S/P-converter 13.

Since P/S-converters 26 and 27 both send their data to the same S/P-converter 13, they have to be operated in sequence. For this reason, pulse signals are selectively supplied from a single counter 48 to these converters. An even trigger signal 40 and an odd trigger signal 39 are supplied to counter 48 via OR gate 44, and counting starts based on either of these triggers signals. On the other hand, because P/S-converters 26 and 27 must run in sequence, switching circuits 38a and 38b are provided to selectively turn on the supply of the pulse signals to one of the P/S-converters and off to the other one. P/S-converters 26 and 27 begin operating based on the odd and the even trigger signal respectively, and stop upon *k*/2 pulses having been output from counter 48.

In the sixth embodiment, the data word *n* to be printed by the odd-numbered nozzles is selected and set in latch circuit 46, while the data word *n* + *s* to be printed by even-numbered nozzles is selected and set in latch circuit 47. This can be performed simultaneously or one after another. As the next step, even number trigger signal 40 is input, counter 48 begins counting and switching circuit 38b assumes a state to apply the pulse signals from counter 48 to P/S-converter 27 while switching circuit 38a prevents these pulse signals from being applied to P/S-converter 26. As a result, the even-numbered bits of data word *n* + *s* are sent from P/S-converter 27 as a serial substring to S/P-converter 13. When *k*/2 pulses have been sent out from counter 48, odd-number trigger signal 39 is generated in the next step, and counter 48 begins counting again. Switching circuit 38a now assumes a state to apply the pulse signals from counter 48 to P/S-converter 26 while switching circuit 38b prevents these pulse signals from being applied to P/S-converter 27. Through this action, the odd-numbered bits of data word *n* in latch circuit 46 are sent as a serial substring to S/P-converter 13. At the same time the even-numbered bits of data word *n* + *s* that were previously sent to S/P-converter 13 are now shifted from S/P-converter 13 to S/P-converter 14. Thus, while the odd-numbered bits of data word *n* are set in S/P-converter 13, the previously sent even-numbered data bits of data word *n* + *s* are shifted from S/P-converter 13 to S/P-converter 14 in the same way as in the fifth embodiment. When inputting of the odd-numbered bits and the even-numbered bits in S/P-converters 13 and 14, respectively, is completed, printing is performed in the same way as in the preceding embodiments.

Note that although the aforementioned embodiments are explained using a printer in which multiple dot printing elements (nozzles are used as an example only) are alternately positioned in a zigzag arrangement in two rows, the present invention can also be applied to printers in which dot printing elements are arranged in three or more rows. The drive circuit part of the print head has to have a number of S/P-converters equal to the number of rows of dot printing elements and a corresponding number of data words has to be read from image buffer 20 at each printing position of the print head. The measures required to adapt the embodiments explained above to a print head with more than two rows of printing elements will be easily understood by those skilled in the art based on the principles described hereinabove.

So far the invention has been explained with reference to serial type printers. The invention in general and the embodiments described above in particular is/are, however, also applicable to line printers. In line printers the print head typically extends over the full width of the recording medium and relative motion between the print head and the recording medium is only in one direction, namely perpendicular to the line direction in which the print head extends. In serial printers the dot columns defined above extend perpendicularly to the line direction and so do the rows of dot printing elements. In line printers the dot "columns" (more exactly: dot lines) and, correspondingly, the rows (or lines) of dot printing elements extend in the line direction. As in serial printers, grouping all the dot printing elements of a line print head into *i* groups and providing corresponding *i* rows or lines of dot printing elements arrayed and spaced apart from each other in the direction perpendicular to the line direction, allows a higher resolution in the line direction than is possible with a single row or line of dot printing elements. The arrangement of the dot printing elements in two rows or lines in a line printer corresponds to that shown in Fig. 10 if Fig. 10 is turned 90°. The only difference is that in a line printer the number of dot printing elements per row or line is substantially higher so as to cover the full width of the recording medium. As will be appreciated, with such structure of a line printer the individual dot positions of a particular dot column or dot line are also printed in *i* successive steps and the principle of the invention may be applied in the same way as with serial printers. This is also true with respect to the dummy data words provided in accordance with preferred embodiments of the invention. In line printers these dummy data words represent imaginary dot columns or lines outside the top and bottom edges of an image to be printed rather than its line edges, i.e., lateral edges.

## Claims

1. A printing apparatus for printing dot patterns on a recording medium in a matrix composed of dot columns extending in a first direction and arranged substantially parallel to each other in a second direction perpendicular to said first direction, each dot column defining *k* dot positions, the apparatus comprising:
a print head (5) adapted to move relative to the recording medium in said second direction and having *k* dot printing elements (8) which are grouped into *i* groups, wherein *i* ≥ 2, the dot printing elements of each group being arranged in a respective one of *i* rows (11, 12) extending in said first direction, and each two adjacent rows being spaced apart from each other in said second direction by a certain number (s) of said dot columns so that the individual rows are at different print positions relative to said recording medium,
storage means (20) for storing k-bit words of printing data each word including the printing data for a respective one of said dot columns,
data setting means for reading a batch of *i* data words from said storage means, each of said *i* data words corresponding to the dot columns at a respective one of the different print positions of said *i* rows, and for selecting from each of said *i* data words the set of those bits that correspond to the dot printing elements in the respective row, and
print control means (15, 16) for simultaneously controlling each of said *i* groups of dot printing elements based on the respective one of said selected sets of bits,
**characterized in that**
said data words stored in said storage means (20) include printing data words (21, 23a, 23b) and dummy data words (22a, 22b), said printing data words corresponding to a sequence of dot columns to be printed and said dummy data words corresponding to imaginary dot columns contiguous to both ends of said sequence of dot columns, wherein the bits of said dummy data words represent blank dots.

2. The apparatus according to claim 1, wherein
two (*i*=2) groups of dot printing elements (8) are arranged in two rows (11, 12),
the printing elements of a first one of said two rows being displaced in said first direction with respect to the printing elements of the second row so as to form a zigzag arrangement of said printing elements, and
said data setting means for reading a batch of a first and a second data word comprises selection means for selecting a first set of bits from the first data word and a second set of bits from the second data word.

3. The apparatus according to claim 2, wherein one of said first and second sets of bits comprises the even-numbered bits of the respective one data word and the other one of said first and second sets of bits comprises the odd-numbered bits of the respective data word.

4. The apparatus according to Claim 3, wherein said data setting means comprises:
first clock signal generation means for outputting a first clock signal (35),
second clock signal generation means (31) for frequency dividing said first clock signal and outputting a second clock signal (36) of half the frequency of said first clock signal, and
third clock signal generation means (32; 33) for generating a third clock signal (36a) having the same frequency as said second clock signal,
first selection means comprising
parallel-to-serial conversion means (25; 26, 27) for converting said first data word into a first serial bit string in accordance with said first clock signal (35), and
first serial-to-parallel conversion means (14) for converting said first serial bit string into a first data subword in accordance with said second clock signal and for applying said first data subword representing said first set of bits to said print control means (15, 16), and
second selection means comprising
parallel-to-serial conversion means (25; 26, 27) for converting said second data word into a second serial bit string in accordance with said first clock signal (35),
second serial-to-parallel conversion means (13) for converting said second serial bit string into a second data subword in accordance with said third clock signal (36a), and for applying said second data subword representing said second set of bits to said print control means (15, 16), and
means for shifting the phase of said third clock (36a) signal relative to that of said second serial bit string by one period of said first clock signal (35) or a fraction thereof compared to the phase of said second clock signal (36) relative to said first serial bit string.

5. The apparatus according to Claim 4, wherein
one (13) of said first and second serial-to-paraliel conversion means (13, 14) comprises a serial output,
the other one (14) of said first and second serial-to-parallel conversion means has its input connected to said serial output, and
said one serial-to-parallel conversion means (13) is adapted to successively receive said first and said second serial bit strings and, as it receives said second serial bit string, to output said first serial bit string to said other serial-to-parallel conversion means (14).

6. The apparatus according to claim 2, further comprising:
parallel-to-serial conversion means (25; 26, 27) for converting said first and second sets of bits into respective serial bit strings, and
serial-to-parallel conversion means (13, 14) for receiving the serial bit strings and for applying the first and the second set of bits to said print control means (15, 16).

7. The apparatus according to Claim 6, wherein said parallel-to-serial conversion means (25; 26, 27) and said serial-to-parallel conversion means (13, 14) operate with the same clock signal.

8. The apparatus according to Claim 7, comprising counting means (48; 49, 50) for counting a predetermined number of clock pulses of said clock signal, wherein said selection means stops the supply of said clock signal after said count reaches said predetermined number.

9. A method of controlling a printing apparatus to print dot patterns on a recording medium in a matrix composed of dot columns extending in a first direction and arranged substantially parallel to each other in a second direction perpendicular to said first direction, each dot column defining *k* dot positions, wherein a print head (5) is moved relative to the recording medium in said second direction, the print head having *k* dot printing elements (8) which are grouped into *i* groups, wherein *i* ≥ 2, the dot printing elements of each group being arranged in a respective one of *i* rows (11, 12) extending in said first direction, and each two adjacent rows being spaced apart from each other in said second direction by a certain number (s) of said dot columns so that the individual rows are at different print positions relative to said recording medium, the method comprising
the steps of:
(a) storing *k*-bit words of printing data and dummy data (22a, 22b) in storage means (20), the printing data words corresponding to a sequence of dot columns to be printed, each printing data word including the printing data for a respective one of said dot columns, and the dummy data words (22a, 22b) corresponding to imaginary dot columns contiguous to both ends of said sequence of dot columns, wherein the bits of said dummy data words represent blank dots,
(b) reading, from said storage means (20), a batch of *i* data words, each of said *i* data words corresponding to the dot columns at a respective one of the different print positions of said *i* rows;
(c) selecting from each of said *i* data words the set of those bits that correspond to the dot printing elements in the respective row, and
(d) simultaneously printing by controlling each of said *i* groups of dot printing elements based on the respective one of said selected sets of bits.

10. The method according to Claim 9 wherein *i*=2, wherein step (c) comprises:
(e) selecting the bits in even-numbered positions of one of the two data words, and
(f) selecting the bits in odd-numbered positions of the other one of said the two data words.

11. A method according to Claim 10, wherein
step (e) comprises:
(g) converting in accordance with a first clock signal (35) said one data word into a first serial bit string, and
(h) extracting said bits in even-numbered positions from said first serial bit string by means of a second dock signal (36) generated by dividing said first clock signal by 2, and
step (f) comprises:
(i) converting in accordance with said first clock signal (35) said other data word into a second serial bit string, and
(j) extracting said bits in odd-numbered positions from said second serial bit string by means of a third clock signal (36a) having the same frequency as said second clock signal but a phase relative to said second serial bit string shifted by one period of said first clock signal (35) compared to the phase of said second clock signal (36) relative to said first serial bit string.

12. A method according to Claim 9 further comprising the steps of:
(k) selecting one of said first and second sets of bits,
(l) converting the set of bits selected in step (k) into a first serial bit string,
(m) converting said first serial bit string to a first data subword and controlling the corresponding group of dot printing elements in accordance with the bits of said first data subword,
(n) selecting the other one of said first and second sets of bits,
(o) converting the set of bits selected in step (n) into a second serial bit string, and
(p) converting said second serial bit string to a second data subword and controlling the corresponding group of dot printing elements in accordance with the bits of said second data subword.

13. The method of claim 12, wherein said converting in each of steps (I), (m), (o) and (p) is performed in accordance with the same clock signal (35).

## Patentansprüche

1. Druckvorrichtung zum Drucken von Punktmustern auf einen Aufzeichnungsträger in einer Matrix, die aus Punktspalten zusammengesetzt ist, welche sich in einer ersten Richtung erstrecken und im wesentlichen parallel zueinander in einer zweiten Richtung, rechtwinklig zur ersten Richtung, angeordnet sind, wobei jede Punktspalte *k* Punktpositionen bestimmt, und die Vorrichtung folgendes aufweist:
einen Druckkopf (5), der zur Bewegung relativ zum Aufzeichnungsträger in der zweiten Richtung ausgebildet ist und *k* Punktdruckelemente (8) besitzt, die zu *i* Gruppen gruppiert sind, wobei *i* ≥ 2, wobei die Punktdruckelemente jeder Gruppe in einer jeweiligen von *i* Reihen (11, 12) angeordnet sind, die sich in der ersten Richtung erstrecken, und je zwei einander benachbarte Reihen in der zweiten Richtung um eine bestimmte Anzahl (*s*) der Punktspalten voneinander beabstandet sind, so daß die einzelnen Reihen sich an unterschiedlichen Druckpositionen gegenüber dem Aufzeichnungsträger befinden,
eine Speichereinrichtung (20) zum Speichern von *k*-Bit Wörtern von Druckdaten, wobei jedes Wort die Druckdaten für eine jeweilige der Punktspalten umfasst,
eine Datensetzeinrichtung zum Lesen eines Stapels von *i* Datenwörtern aus der Speichereinrichtung, wobei jedes der *i* Datenwörter den Punktspalten an einer jeweiligen der unterschiedlichen Druckpositionen der *i* Reihen entspricht, und zum Auswählen des Satzes derjenigen Bits aus jedem der *i* Datenwörter, welche den Punktdruckelementen in der jeweiligen Reihe entsprechen, und
eine Drucksteuereinrichtung (15, 16) zum gleichzeitigen Steuern jeder der *i* Gruppen von Punktdruckelementen aufgrund des jeweiligen der ausgewählten Sätze Bits,
**dadurch gekennzeichnet, daß** die in der Speichereinrichtung (20) gespeicherten Datenwörter Druckdatenwörter (21, 23a, 23b) und Leerdatenwörter (22a, 22b) umfassen, wobei die Druckdatenwörter einer zu druckenden Folge von Punktspalten entsprechen und die Leerdatenwörter imaginären Punktspalten entsprechen, die an beide Enden der Folge von Punktspalten anschließen, wobei die Bits der Leerdatenwörter leere Punkte wiedergeben.

2. Vorrichtung nach Anspruch 1, bei der zwei (*i*=2) Gruppen Punktdruckelemente (8) in zwei Reihen (11, 12) angeordnet sind, die Druckelemente einer ersten der beiden Reihen gegenüber den Druckelementen der zweiten Reihe in der ersten Richtung versetzt sind, so daß eine Zickzackanordnung der Druckelemente gebildet ist, und die Datensetzeinrichtung zum Lesen eines Stapels aus einem ersten und einem zweiten Datenwort eine Wähleinrichtung aufweist, die einen ersten Satz Bits aus dem ersten Datenwort und einen zweiten Satz Bits aus dem zweiten Datenwort auswählt.

3. Vorrichtung nach Anspruch 2, bei der vom ersten und zweiten Satz Bits einer die geradzahligen Bits des jeweiligen einen Datenworts aufweist und vom ersten und zweiten Satz Bits der andere die ungeradzahligen Bits des jeweiligen Datenworts aufweist.

4. Vorrichtung nach Anspruch 3, bei der die Datensetzeinrichtung folgendes aufweist:
eine erste Taktsignalerzeugereinrichtung zur Ausgabe eines ersten Taktsignals (35),
eine zweite Taktsignalerzeugereinrichtung (31) zur Frequenzteilung des ersten Taktsignals und Ausgabe eines zweiten Taktsignals (36) der halben Frequenz des ersten Taktsignals, und
eine dritte Taktsignalerzeugereinrichtung (32; 33) zum Erzeugen eines dritten Taktsignals (36a), welches die gleiche Frequenz hat wie das zweite Taktsignal,
eine erste Wähleinrichtung mit einer Parallel/Seriell-Umsetzeinrichtung (25; 26, 27) zum Umwandeln des ersten Datenwortes in eine erste serielle Bitfolge entsprechend dem ersten Taktsignal (35), und eine erste Seriell/Parallel-Umsetzeinrichtung (14) zum Umwandeln der ersten seriellen Bitdatenfolge in ein erstes Datenteilwort entsprechend dem zweiten Taktsignal und zum Anlegen des ersten Datenteilworts, welches den ersten Satz Bits darstellt, an die Drucksteuereinrichtung (15, 16), und
eine zweite Wähleinrichtung mit einer Parallel/Seriell-Umsetzeinrichtung (25; 26, 27) zum Umwandeln des zweiten Datenwortes in eine zweite serielle Bitfolge entsprechend dem ersten Taktsignal (35), einer zweiten Seriell/Parallel-Umsetzeinrichtung (13) zum Umwandeln der zweiten seriellen Bitfolge in ein zweites Datenteilwort entsprechend dem dritten Taktsignal (36a) und zum Anlegen des zweiten Datenteilworts, weiches den zweiten Satz Bits darstellt, an die Drucksteuereinrichtung (15, 16) und mit einer Einrichtung zum Verschieben der Phase des dritten Taktsignals (36a) bezüglich der der zweiten seriellen Bitfolge um eine Periode des ersten Taktsignals (35) oder einen Bruchteil derselben im Vergleich zu der Phase des zweiten Taktsignals (36) bezüglich der ersten seriellen Bitfolge.

5. Vorrichtung nach Anspruch 4, bei der von der ersten und zweiten Seriell/Parallel-Umsetzeinrichtung (13, 14) eine (13) einen seriellen Ausgang aufweist, die andere (14) der ersten und zweiten Seriell/Parallel-Umsetzeinrichtungen mit ihrem Eingang an den seriellen Ausgang angeschlossen ist, und die eine Seriell/ Parallel-Umsetzeinrichtung (13) ausgebildet ist, nacheinander die erste und die zweite serielle Bitfolge zu empfangen und während des Empfangs der zweiten seriellen Bitfolge die erste serielle Bitfolge an die andere Seriell/Parallel-Umsetzeinrichtung (14) auszugeben.

6. Vorrichtung nach Anspruch 2, ferner mit einer Parallel/Seriell-Umsetzeinrichtung (25; 26, 27) zum Umwandeln des ersten und zweiten Satzes Bits in jeweilige serielle Bitfolgen und einer Seriell/Parallel-Umsetzeinrichtung (13, 14) zum Empfangen der seriellen Bitfolgen und Anlegen des ersten und zweiten Satzes Bits an die Drucksteuereinrichtung (15, 16).

7. Vorrichtung nach Anspruch 6, bei der die Parallel/Seriell-Umsetzeinrichtung (25; 26, 27) und die Seriell/Parallel-Umsetzeinrichtung (13, 14) mit dem gleichen Taktsignal arbeiten.

8. Vorrichtung nach Anspruch 7 mit einer Zähleinrichtung (48; 49, 50) zum Zählen einer vorherbestimmten Anzahl Taktimpulse des Taktsignals, wobei die Wähleinrichtung die Zufuhr der Taktsignale anhält, nachdem die Zählung die vorherbestimmte Anzahl erreicht.

9. Verfahren zum Steuern einer Druckvorrichtung zum Drucken von Punktmustern auf einen Aufzeichnungsträger in einer Matrix, die aus Punktspalten zusammengesetzt ist, welche sich in einer ersten Richtung erstrecken und in einer zweiten Richtung, rechtwinklig zu der ersten Richtung, im wesentlichen parallel zueinander angeordnet sind, von denen jede Punktspalte *k* Punktpositionen bestimmt, wobei ein Druckkopf (5) relativ zum Aufzeichnungsträger in der zweiten Richtung bewegt wird, der Druckkopf *k* Punktdruckelemente (8) besitzt, die in *i* Gruppen gruppiert sind, wobei *i* ≥ 2, die Punktdruckelemente jeder Gruppe in einer jeweiligen der *i* Reihen (11, 12) angeordnet sind, die sich in der ersten Richtung erstrecken, und je zwei benachbarte Reihen in der zweiten Richtung um eine bestimmte Anzahl (s) der Punktspalten voneinander beabstandet sind, so daß die einzelnen Reihen sich an unterschiedlichen Druckpositionen gegenüber dem Aufzeichnungsträger befinden, wobei das Verfahren folgende Schritte aufweist:
(a) Speichern von *k*-Bit Wörtern Druckdaten und Leerdaten (22a, 22b) in einer Speichereinrichtung (20), von denen die Druckdatenwörter einer zu druckenden Folge von Punktspalten entsprechen, jedes Druckdatenwort die Druckdaten für eine jeweilige der Punktspalten umfaßt, und die Leerdatenwörter (22a, 22b) imaginären Punktspalten entsprechen, die sich an beiden Enden der Folge der Punktspalten anschließen, wobei die Bits der Leerdatenwörter leere Punkte darstellen,
(b) Lesen eines Stapels von *i* Datenwörtern aus der Speichereinrichtung (20), wobei jedes der *i* Datenwörter den Punktspalten an einer jeweiligen der unterschiedlichen Druckpositionen der *i* Reihen entspricht;
(c) Wählen des Satzes derjenigen Bits, die den Punktdruckelementen in der jeweiligen Reihe entsprechen aus jedem der *i* Datenwörter, und
(d) gleichzeitiges Drucken durch Steuern jeder der *i* Gruppen Punktdruckelemente aufgrund des jeweiligen der ausgewählten Sätze Bits.

10. Verfahren nach Anspruch 9, bei dem *i*=2, wobei der Schritt (c) aufweist:
(e) Wählen der Bits an geradzahligen Positionen eines der beiden Datenwörter, und
(f) Wählen der Bits an ungeradzahligen Positionen des anderen der beiden Datenwörter.

11. Verfahren nach Anspruch 10, bei dem der Schritt (e) aufweist:
(g) Umwandeln des einen Datenworts entsprechend dem ersten Taktsignal (35) in eine erste serielle Bitfolge, und
(h) Extrahieren der Bits an geradzahligen Positionen aus der ersten seriellen Bitfolge mittels eines durch Dividieren des ersten Taktsignals durch 2 erzeugten zweiten Taktsignals (36), und der Schritt (f) aufweist:
(i) Umwandeln des anderen Datenworts entsprechend dem ersten Taktsignal (35) in eine zweite serielle Bitfolge, und
(j) Extrahieren der Bits an ungeradzahligen Positionen aus der zweiten seriellen Bitfolge mittels eines dritten Taktsignals (36a), welches die gleiche Frequenz wie das zweite Taktsignal, aber eine Phase bezüglich der zweiten seriellen Bitfolge hat, die um eine Periode des ersten Taktsignals (35) im Vergleich zu der Phase des zweiten Taktsignals (36) bezüglich der ersten seriellen Bitfolge verschoben ist.

12. Verfahren nach Anspruch 9, ferner mit folgenden Schritten:
(k) Wählen eines der ersten und zweiten Sätze Bits,
(l) Umwandeln des im Schritt (k) gewählten Satzes Bits in eine erste serielle Bitfolge,
(m) Umwandeln der ersten seriellen Bitfolge in ein erstes Datenteilwort und Steuern der entsprechenden Gruppe Punktdruckelemente entsprechend den Bits des ersten Datenteilwortes,
(n) Wählen des anderen der ersten und zweiten Sätze Bits,
(o) Umwandeln des im Schritt (n) gewählten Satzes Bits in eine zweite serielle Bitfolge, und
(p) Umwandeln der zweiten seriellen Bitfolge in ein zweites Datenteilwort und Steuern der entsprechenden Gruppe Punktdruckelemente entsprechend den Bits des zweiten Datenteilwortes.

13. Verfahren nach Anspruch 12, bei dem das Umwandeln in jedem der Schritte (l), (m), (o) und (p) nach Maßgabe desselben Taktsignals (35) durchgeführt wird.

## Revendications

1. Dispositif d'impression pour imprimer des formations de points sur un support d'enregistrement dans une matrice composée de colonnes de points s'étendant dans une première direction et disposées sensiblement parallèlement les unes aux autres dans une deuxième direction perpendiculaire à la première direction, chaque colonne de points définissant *k* positions de points, le dispositif comprenant :
une tête d'impression (5) adaptée pour se déplacer par rapport au support d'enregistrement dans la deuxième direction et comportant *k* éléments d'impression par points (8) qui sont groupés en *i* groupes, où *i* ≥ 2, les éléments d'impression par points de chaque groupe étant disposés sur l'une respective des *i* rangées (11, 12) s'étendant dans la première direction, et toutes les deux rangées voisines étant espacées l'une de l'autre dans la deuxième direction d'un certain nombre (s) de colonnes de points de façon que les rangées individuelles soient dans des positions d'impression différentes par rapport au support d'enregistrement,
un moyen de stockage (20) destiné à stocker des mots de *k* binaires de données d'impression, chaque mot incluant les données d'impression correspondant à l'une respective des colonnes de points,
un moyen de définition des données destiné à lire un lot de *i* mots de données dans le moyen de stockage, chacun des *i* mots de données correspondant aux colonnes de points dans l'une respective des différentes positions d'impression des *i* rangées, et destiné à sélectionner pour chacun des *i* mots de données, l'ensemble des binaires qui correspondent aux éléments d'impression par points de la rangée respective, et
un moyen de commande d'impression (15, 16) destiné à commander simultanément chacun des *i* groupes d'éléments d'impression par points sur la base de l'un respectif des ensembles sélectionnés de binaires,
**caractérisée en ce que**
les mots de données stockés dans le moyen de stockage (20) incluent des mots de données d'impression (21, 23a, 23b) et des mots de données fictives (22a, 22b), les mots de données d'impression correspondant à une séquence de colonnes de points devant être imprimée et les mots de données fictives correspondant à des colonnes de points imaginaires contiguës aux deux extrémités de la séquence de colonnes de points, les binaires des mots de données fictives représentant des points en blanc.

2. Dispositif selon la revendication 1, dans lequel
deux (*i* = 2) groupes d'éléments d'impression par points (8) sont disposés sur deux rangées (11, 12),
les éléments d'impression d'une première des deux rangées étant déplacés dans la première direction par rapport aux éléments d'impression de la deuxième rangée de façon à obtenir une disposition en zigzag des éléments d'impression, et
le moyen de définition des données destiné à lire un lot composé d'un premier et d'un deuxième mots de données comprend un moyen de sélection destiné à sélectionner un premier ensemble de binaires à partir du premier mot de données et un deuxième ensemble de binaires à partir du deuxième mot de données.

3. Dispositif selon la revendication 2, dans lequel l'un des premier et deuxième ensembles de binaires comprend les binaires pairs du mot de données respectif et l'autre des premier et deuxième ensembles de binaires comprend les binaires impairs du mot de données respectif.

4. Dispositif selon la revendication 3, dans lequel le moyen de définition des données comprend :
un moyen pour générer un premier signal d'horloge destiné à sortir un premier signal d'horloge (35),
un moyen (31) pour générer un deuxième signal d'horloge pour diviser la fréquence du premier signal d'horloge et sortir un deuxième signal d'horloge (36), dont la fréquence est la moitié de celle du premier signal d'horloge, et
un moyen (32 ; 33) pour générer un troisième signal d'horloge destiné à générer un troisième signal d'horloge (36a) ayant la même fréquence que le deuxième signal d'horloge,
un premier moyen de sélection comprenant
un moyen de conversion parallèle/série (25 ; 26, 27) destiné à convertir le premier mot de données en un premier train de binaires en fonction du premier signal d'horloge (35), et
un premier moyen de conversion série/parallèle (14) destiné à convertir le premier train de binaires en un premier sous-mot de données en fonction du deuxième signal d'horloge et à appliquer le premier sous-mot de données représentant le premier ensemble de binaires au moyen de commande d'impression (15, 16), et
un deuxième moyen de sélection comprenant
un moyen de conversion parallèle/série (25 ; 26, 27) destiné à convertir le deuxième mot de données en un deuxième train de binaires en fonction du premier signal d'horloge (35), et
un deuxième moyen de conversion série/parallèle (13) destiné à convertir le deuxième train de binaires en un deuxième sous-mot de données en fonction du troisième signal d'horloge (36a) et à appliquer le deuxième sous-mot de données représentant le deuxième ensemble de binaires au moyen de commande d'impression (15, 16), et
un moyen pour décaler la phase du troisième signal d'horloge (36a) par rapport à celle du deuxième train de binaires d'une période du premier signal d'horloge (35) ou d'une fraction de période comparée à la phase du deuxième signal d'horloge (36) par rapport au premier train de binaires.

5. Dispositif selon la revendication 4, dans lequel
l'un (13) des premier et deuxième moyens de conversion série/parallèle (13, 14) comprend une sortie série,
l'autre (14) des premier et deuxième moyens de conversion série/parallèle a son entrée connectée à la sortie série, et
le moyen de conversion série/parallèle (13) est adapté pour recevoir successivement les premier et deuxième trains de binaires et pour, lorsqu'il reçoit le deuxième train de binaires, sortir le premier train de binaires sur l'autre moyen de conversion série/parallèle (14).

6. Dispositif selon la revendication 2, comprenant en outre :
un moyen de conversion parallèle/série (25 ; 26, 27) destiné à convertir les premier et deuxième ensembles de binaires en trains respectifs de binaires, et
des moyens de conversion série/parallèle (13, 14) destinés à recevoir les trains de binaires et à appliquer le premier et le deuxième ensembles de binaires au moyen de commande d'impression (15, 16).

7. Dispositif selon la revendication 6, dans lequel le moyen de conversion parallèle/série (25 ; 26, 27) et les moyens de conversion série/parallèle (13, 14) fonctionnent avec le même signal d'horloge.

8. Dispositif selon la revendication 7, comprenant un moyen de comptage (48 ; 49, 50) destiné à compter un nombre prédéterminé d'impulsions d'horloge du signal d'horloge, dans lequel le moyen de sélection arrête la fourniture du signal d'horloge lorsque le compte atteint le nombre prédéterminé..

9. Procédé de commande d'un dispositif d'impression pour imprimer des formations de points sur un support d'enregistrement dans une matrice composée de colonnes de points s'étendant dans une première direction et disposées sensiblement parallèlement les unes aux autres dans une deuxième direction perpendiculaire à la première direction, chaque colonne de points définissant *k* positions de points, dans lequel une tête d'impression (5) est déplacée par rapport au support d'enregistrement dans la deuxième direction, la tête d'impression comportant *k* éléments d'impression par points (8) qui sont groupés en *i* groupes, où *i ≥* 2, les éléments d'impression par points de chaque groupe étant disposés sur l'une respective des *i* rangées (11, 12) s'étendant dans la première direction, et toutes les deux rangées voisines étant espacées l'une de l'autre dans la deuxième direction d'un certain nombre (s) de colonnes de points de façon que les rangées individuelles soient dans des positions d'impression différentes par rapport au support d'enregistrement,
le procédé comprenant les étapes consistant à :
(a) stocker des mots de *k* binaires de données d'impression et de données fictives (22a, 22b) dans un moyen de stockage (20), les mots de données d'impression correspondant à une séquence de colonnes de points devant être imprimée, chaque mot de données d'impression comprenant les données d'impression correspondant à l'une respective des colonnes de points, et les mots de données fictives (22a, 22b) correspondant à des colonnes de points imaginaires contiguës aux deux extrémités de la séquence de colonnes de points, les binaires des mots de données fictives représentant des points en blanc,
(b) lire, dans le moyen de stockage (20), un lot de *i* mots de données, chacun des *i* mots de données correspondant aux colonnes de points dans l'une respective des différentes positions d'impression des *i* rangées ;
(c) sélectionner à partir de chacun des *i* mots de données, l'ensemble des binaires qui correspondent aux éléments d'impression par points de la rangée respective, et
(d) effectuer l'impression simultanément en commandant chacun des *i* groupes d'éléments d'impression par points sur la base de l'un respectif des ensembles sélectionnés de binaires,

10. Procédé selon la revendication 9, où *i* = 2, dans lequel l'étape (c) consiste à :
(e) sélectionner les binaires aux positions paires de l'un des deux mots de données, et
(f) sélectionner les binaires aux positions impaires de l'autre des deux mots de données.

11. Procédé selon la revendication 10, dans lequel
l'étape (e) consiste à :
(g) convertir en fonction d'un premier signal d'horloge (35) le premier mot de données en un premier train de binaires, et
(h) extraire les binaires aux positions paires du premier train de binaires au moyen d'un deuxième signal d'horloge (36) généré en divisant par 2 le premier signal d'horloge, et
l'étape (f) consiste à :
(i) convertir en fonction du premier signal d'horloge (35) l'autre mot de données en un deuxième train de binaires, et
(j) extraire les binaires aux positions impaires du deuxième train de binaires au moyen d'un troisième signal d'horloge (36a) ayant la même fréquence que le deuxième signal d'horloge, mais une phase par rapport au deuxième train de binaires qui est décalée d'une période du premier signal d'horloge (35) comparée à la phase du deuxième signal d'horloge (36) par rapport au premier train de binaires.

12. Procédé selon la revendication 9, comprenant en outre les étapes consistant à :
(k) sélectionner l'un desdits premier et deuxième ensembles de binaires,
(l) convertir l'ensemble de binaires sélectionné à l'étape (k) en un premier train de binaires,
(m) convertir le premier train de binaires en un premier sous-mot de données et commander le groupe correspondant d'éléments d'impression par points en fonction des binaires du premier sous-mot de données,
(n) sélectionner l'autre desdits premier et deuxième ensembles de binaires,
(o) convertir l'ensemble de binaires sélectionné à l'étape (n) en un deuxième train de binaires,
(p) convertir le deuxième train de binaires en un deuxième sous-mot de données et commander le groupe correspondant d'éléments d'impression par points en fonction des binaires du deuxième sous-mot de données.

13. Procédé selon la revendication 12, dans lequel la conversion à chacune des étapes (l), (m), (o) et (p) est exécutée en fonction du même signal d'horloge (35).
